Europäisches Patentamt

European Patent Office

Office européen des brevets

(11) Veröffentlichungsnummer : **0 466 682 A1**

(12) **EUROPÄISCHE PATENTANMELDUNG**

(21) Anmeldenummer : **91890143.0**

(22) Anmeldetag : **05.07.91**

(51) Int. Cl.$^5$ : **G05B 19/42, B21B 37/00**

(30) Priorität : **12.07.90 AT 1483/90**

(43) Veröffentlichungstag der Anmeldung :
**15.01.92 Patentblatt 92/03**

(84) Benannte Vertragsstaaten :
**BE CH DE ES FR GB IT LI LU NL SE**

(71) Anmelder : **BÖHLER Gesellschaft m.b.H.**
**Mariazellerstrasse 25**
**A-8605 Kapfenberg (AT)**

(72) Erfinder : **Emminger, Herbert**
**Johann Böhmstrasse 45**
**A-8605 Kapfenberg (AT)**

(54) **Verfahren und Verformungseinrichtung zur Messung und Aufzeichnung von Verfahrensparametern bei der Werkstückverformung.**

(57)   Die Erfindung betrifft ein Verfahren und eine Einrichtung zur Messung und Aufzeichnung von Verfahrensparametern bei der Werkstückverformung und/oder zur Steuerung der Verformung von Werkstücken in Abhängigkeit von zumindest einem gemessenen Verfahrensparameter. Erfindungsgemäß ist vorgesehen, daß bei schritt- bzw. taktweise erfolgender Verformung von Werkstücken der Beginn der Meßwerterfassung der Verfahrensparameter in Abhängigkeit von einer für die jeweiligen Verformungstake(-schritte) charakteristische Veränderung zumindest eines Parameterwertes gewählt wird und daß dieser durch die gewählte Parameterveränderung gegebene Beginn der Meßwerterfassung auch in allen folgenden Verformungstakten (-schritten) zumindest desselben Verformungsstiches als Beginn der Erfassung der Parameter in diesen Verformungstakten herangezogen wird.

*Fig. 2*

EP 0 466 682 A1

Die Erfindung betrifft ein Verfahren zur Messung und Aufzeichnung von Verfahrensparametern bei der Werkstückverformung und/oder zur Steuerung der Verformung von Werkstücken in Abhängigkeit von zumindest einem gemessenen Verfahrensparameter.

Ziel der Erfindung ist die Erstellung eines Verfahrens dieser Art, bei dem eine kontinuierliche Aufzeichnung und gegebenenfalls Bereitstellung der Werte der wichtigsten Verfahrensparameter möglich ist, präzise Vorschriften zur Werkstückverformung vorgegeben werden können und die Verformung rasch optimiert werden kann, insbesondere in Zusammenhang mit gerade getätigten Verformungstakten.

Dieses Ziel wird bei einem Verfahren der eingangs genannten Art erfindungsgemäß dadurch erreicht, daß bei schritt- bzw. taktweise erfolgender Verformung von Werkstücken, z.B. Hämmern, Langschmieden, Pilgerschrittrohrwalzen od. dgl., der Beginn der Meßwertverformung der Verfahrensparameter in Abhängigkeit von einer für die jeweiligen Verformungstakte(-schritte) charakteristischen Veränderung zumindest eines Parameterwertes gewählt wird und daß dieser durch die gewählte Parameterveränderung gegebene Beginn der Meßwerterfassung folgenden Verformungstakten(-schritten) zumindest desselben Verformungsstiches als Beginn der Erfassung der Parameter in diesen Verformungstakten herangezogen wird.

Durch diese in allen Verformungstakten zu gleichen Zeiten und unter im wesentlichen denselben Bedingungen erfolgende Erfassung und Aufzeichnung bzw. Erfassung und Verwendung der gemessenen Parameter zur Steuerung des Verfahrens wird erreicht, daß die Verformung "on-line" optimiert werden kann und der Ausschuß bei den geformten Werkstücken minimiert wird. Überdies kann eine Verformungsdokumentation auf Grund der Vielzahl von erfaßten Meßwerten erstellt werden, die zur Qualitätsdokumentation herangezogen werden kann.

Bei einer bevorzugten Ausführungsform des erfindungsgemäßen Verfahrens ist vorgesehen, daß als Parameter die vom Verformungswerkzeug auf das Werkstück ausgeübte Kraft herangezogen wird und daß mit der Meßwerterfassung zum Zeitpunkt der maximalen Krafteinwirkung des Verformungswerkzeuges auf das zu verformende Werkstück bzw. bei Feststellung einer wesentlichen linderung des Anstieges bzw. Verlaufes der vom Verformungswerkzeug auf das Werkstück ausgeübten Kraft begonnen wird. Die ausgeübte Kraft ist eine charakteristische Größe für jeden Verformungstakt. Die maximale Krafteinwirkung bzw. die wesentliche linderung des Kraftanstieges tritt in der Regel dann auf, wenn die plastische Verformung des Werkstückes einsetzt und ist von der Geschwindigkeit der Verformungswerkzeuge bzw. vom Abstand der Verformungswerkzeuge zum Werkstück unabhängig, sodaß damit eine einrichtungsunabhängige Meßgröße zur Verfügung steht.

Bevorzugt ist es, wenn während eines Verformungstaktes vom Beginn der Meßwerterfassung bis zu dem gegebenenfalls vom Ende der Kraftaufbringung auf das Werkstück definierten Meßende eine Vielzahl von Erfassungen bzw. Messungen der einzelnen Parameter vorgenommen wird. Durch diese Vielzahl von Messungen bzw. erfaßten Parametern kann ein optimales Verformungsprotokoll aufgenommen werden und Irrtümer in der Datenerfassung können minimiert werden.

Bei einer weiteren besonders vorteilhaften Ausführungsform der Erfindung ist vorgesehen, daß die im Zuge der oftmaligen Messungen erfaßten Werte eines Verformungstaktes gemittelt werden und der gemittelte Wert bzw. die maximalen und minimalen Meßwerte aufgezeichnet und/oder dargestellt und vorzugsweise zur Steuerung der Parameter zumindest des folgenden Verformungstaktes und/oder Verformungsstiches herangezogen werden. Durch Aufnahme der Mittelwerte werden die Fehlerquellen bei der Datenerfassung weiter minimiert und repräsentante Werte zur Verfügung gestellt.

Um die Qualität der Meßwerterfassung zu erhöhen ist vorgesehen, daß außerhalb vorgegebener Parameterwerte liegende Meßwerte nicht berücksichtigt bzw. vor der Auswertung bzw. Aufzeichnung ausgeschieden werden. Die vorgegebenen Parameterwerte sind vorteilhafterweise Mittelwerte, die aus vorangehenden Verformungsstichen oder Verformungstakten gewonnen wurden oder auch empirisch festgelegt wurden; werden außerhalb der Norm liegende Parameter ausgeschieden, werden die Meßresultate präzisiert.

Schließlich kann vorgesehen sein, daß die erfaßten Meßwerte und/oder die für die einzelnen Verformungstakte gemittelten Werte über einen Verformungsstich gemittelt und aufgezeichnet und/oder dargestellt und vorzugsweise zur Steuerung zumindest des folgenden Verformungstaktes und/oder Verformungsstiches herangezogen werden.

Bevorzugt ist es, wenn als Parameter die Verformungskraft und/oder die Werkzeugzustellung und/oder die Eintritts- und/oder die Austrittstemperatur des Werkstückes in die bzw. aus der Verformungsrichtung und/oder die Bewegung bzw. die Geschwindigkeit bzw. der zurückgelegte Weg des Werkstückes in die und/oder aus der Verformungseinrichtung und/oder die Motorleistung für den Antrieb der Verformungseinrichtung gemessen werden und gegebenenfalls in Abhängigkeit von dem Ergebnis eines Vergleiches der Parameter-Istwerte mit vorgegebenen Sollwerten für zumindest einen folgenden Verformungstakt eingeregelt werden. Diese angeführten Verformungsparameter sind die wesentlichen Parameter, von denen insbesondere die Temperaturmessung von besonderer Bedeutung ist, die Messung der Schmiedekraft sollte möglichst präzis erfolgen, wenn diese zur Triggerung des Beginns der Meßwerterfassung herangezogen wird.

Eine vorteilhafte Ausführungsform des Verfahrens erfolgt dann, wenn zur Steuerung der Parameter die im Zuge vorangehender Verformungstakte und/oder Verformungsstiche von gleichartigen Werkstücken erfaßte Meßwerte gegebenenfalls gemeinsam mit empirisch ermittelten Werten herangezogen werden; es ist damit möglich, die gemessenen Parameter sowohl aufzuzeichnen als auch zur Steuerung nachfolgender Verformungstakte bzw. Verformungsstiche heranzuziehen, womit die Effizienz des Verfahrens erhöht wird; die Eingabe bzw. die zusätzliche Verwendung von empirisch ermittelten Werten berücksichtigt die Erfahrung des Fachmannes bei der Werkstückverformung und kann mitunter wesentlich zur optimalen Verfahrnsführung beitragen.

Vorteilhafterweise ist vorgesehen, daß die Zeitspanne zwischen dem Beginn der Meßwerterfassung und dem Meßende kleiner ist als die Zeitdauer zwischen dem Beginn aufeinanderfolgender Verformungstakte bzw. gegebenenfalls kleiner ist als die Zeitdauer zwischen dem jeweiligen Beginn des Anstieges der vom Verformungswerkzeug ausgeübten Kraft in zwei aufeinanderfolgenden Verformungstakten; es wird durch diese Vorgangsweise der Meßwerteverarbeitungseinrichtung Zeit zur Verfügung gestellt, in der ohne daß weitere Signale einlangen, eine Verarbeitung der aufgenommenen Signale stattfinden kann.

Eine Verformungseinrichtung zur Durchführung des eingangs erwähnten Verfahrens ist erfindungsgemäß dadurch gekennzeichnet, daß bei takt- bwz. schrittweise Verformungen eines Werkstückes vornehmenden Verformungseinrichtungen, z.B. Schmiedeeinrichtungen, Hämmerwerken, Pilgerschrittrohrwalzwerken od. dgl., zumindest eine Meßeinrichtung für die von den Verformungswerkzeugen aufgebrachte Kraft und/oder für die Einlauf- und/oder Auslauftemperatur des Werkstückes in die bzw. aus der Verformungseinrichtung und/oder den von den Bewegungseinrichtungen bzw. den vom Werkstück zurückgelegten Weg bzw. der Geschwindigkeit in die und /oder aus der Verformungseinrichtung und/oder für die Leistung des Antriebs der Verformungswerkzeuge vorgesehen ist, welche Meßeinrichtung(en) an eine Meßwertverarbeitungs- und/oder - aufzeichnungs- und/oderanzeigeeinheit angeschlossen ist (sind).

Mit einer derartigen Verformungseinrichtung ist eine optimale Aufzeichnung der Verfahrensparameter möglich, sowie deren Verwendung zur Steuerung des Verfahrens; es werden eine Verbesserung der Erzeugungssicherheit und eine Erhöhung der Reproduzierbarkeit der Verformung insbesondere schwer verformbarer Werkstücke erreicht. Die Daten können vorteilhafterweise in einem Rechner als Meßwertverarbeitungseinrichtung ausgewertet und gespeichert werden und z.B. durch eine Bildschirmanzeige optisch dargestellt werden. Auch die Verwendung eines Druckers zur graphischen Parameterdarstellung ist möglich.

Eine bevorzugte Ausführungsform der erfindungsgemäßen Einrichtung ist dadurch gekennzeichnet, daß die Einrichtungen zur Bewegung des Werkstückes in die und/oder aus der Verformungseinrichtung und/oder der Antriebsmotor im Hinblick auf seine Motorleistung und/oder die Schmiedekraft von der Meßwertverarbeitungseinrichtung in Abhängigkeit von gemessenen und/oder eingegebenen Parameterwerten gesteuert sind.

Ein einfacher Aufbau ergibt sich, wenn die Meßeinrichtung(en) und/oder die Meßwertverarbeitungs- und - speichereinrichtung von der Meßeinrichtung für die Schmiedekraft zur Festlegung des Zeitpunktes bzw. des Beginns und gegebenenfalls auch des Endes der allenfalls wiederholt erfolgenden Messungen der Parameter getriggert ist oder wenn die Bewegungseinrichtungen für die Zufuhr oder rotation des Werkstückes zur oder in der Verformungseinrichtung einen Endanschlag oder einen Schwingbremsenruhepunkt zur Definition der Ausgangslage des Werkstückes vor jedem Verformungstakt besitzt. Damit werden ein genauer Beginn der Meßwerterfassung und eine genaue Lagedefinition des Werkstückes vor der Verformung erreicht.

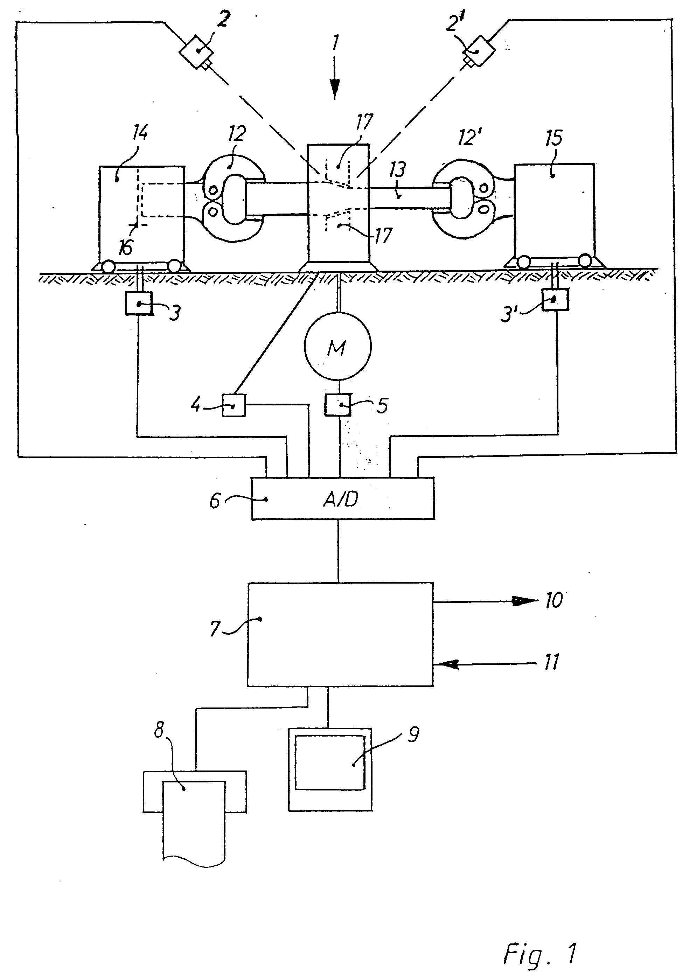

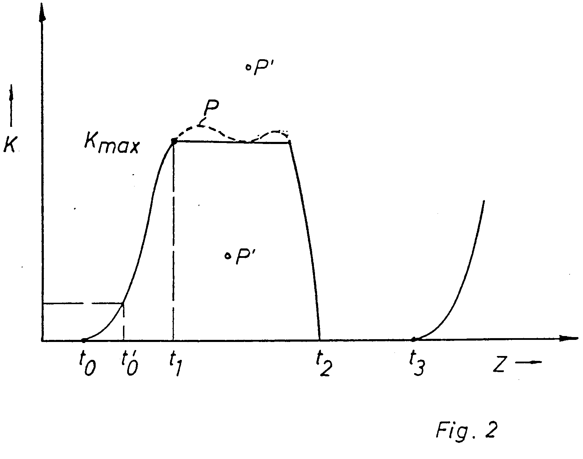

Im folgenden werden das erfindungsgemäße Verfahren sowie die erfindungsgemäße Einrichtung beispielsweise anhand der Zeichnungen näher erläutert. Es zeigen Fig. 1 schematisch den Aufbau eines Ausführungsbeispieles einer erfindungsgmäßen Einrichtung und Fig. 2 ein Schaubild.

Fig. 1 zeigt beispielsweise eine erfindungsgemäße Verformungseinrichtung, z.B. eine Langschmiedemaschine, die schematisch mit 1 bezeichnet ist. Durch diese Verformungseinrichtung 1 wird ein mit Backen 12, 12′ gehaltenes Werkstück 13 durchbewegt. Die Backen 12, 12′ sind von Bewegungseinrichtungen 14 und 15 getragen, welche das Werkstück 13 in die Verformungseinrichtung 1 einführen und gegebenenfalls drehen oder aus dieser herausziehen, je nach dem von welcher Seite der Verformungseinrichtung 1 das Werkstück 13 dieser zugeführt werden soll.

Mit 2 und 2′ sind Temperaturmeßeinrichtungen bezeichnet, welche einerseits die Temperatur des Werkstückes 13 vor seiner Einführung in die Verformungseinrichtung 1 und andererseits seine Temperatur nach seiner Verformung bzw. bei Verlassen der Verformungseinrichtung messen. Den Bewegungseinrichtungen 14 und 15 sind Wegmeßeinrichtungen 3 bzw. 3′ zugeordnet, um so der Weg und gegebenenfalls die Geschwindigkeit des Werkstückes 13 in bzw. aus der Verformungseinrichtung 1 feststellen zu können.

Schematisch ist in der Bewegungseinrichtung 14 ein Endanschlag 16 bzw. eine Schwingbremse dargestellt, mit welchem(r) jeweils die in den Bewegungseinrichtungen 14 und 15 um ihre Horizontalachse drehbar gelagerten Backen 12, 12′ bzw. ihre Endposition festlegbar ist, um eine definierte Ausgangslage für die Messung des vom Werkstück 13 zurückgelegten Weges bzw. Winkelschrittes zu erhalten.

Mit 4 ist eine Meßeinrichtung zur Messung der Schmiedekraft K bezeichnet und mit 5 eine Meßeinrichtung zur Leistungsaufnahme des Motors M. Die Messung der Schmiedekraft erfolgt bei einer Langschmiedemaschine vorteilhafterweise über den Ringraumdruck der Verformungseinrichtung 1 und die Meßeinrichtung 5 ermittelt die aufgenommene elektrische Wirkleistung des bzw. der Antriebsmotore M. Die Temperaturmeßeinrichtungen 2, 2′ sind vorteilhafterweise Infrarotmeßeinrichtungen.

Die von den einzelnen Meßeinrichtungen 2,2′,3,3′,4,5 abgegebenen analogen und/oder digitalen Meßwerte werden je nach Bedarf über einen Analog-Digital-Umwandler 6 einer Meßwertverarbeitungs- und -speichervorrichtung 7, vorteilhafterweise einen Rechner, zugeführt. An die Meßwertverarbeitungs- und -speichereinrichtung 7 kann ein Schreiber, Drucker od.dgl. 8 bzw. ein Bildschirm 9 angeschlossen sein. Die Meßwertverarbeitungs- und- speichereinrichtung 7 umfaßt ferner eine Eingabeeinrichtung 11, mit der empirisch ermittelte Parameter eingegeben werden können, die ergänzend zur Signalauswertung bzw. zur Steuerung der Verformungseinrichtung 1 herangezogen werden können. Die entsprechenden Steuersignale für die Verformungseinrichtung 1 bzw. die Bewegungsantriebe der Bewegungseinrichtungen 14 und 15 bzw. für die Einstellung der Verformungs- bzw. Schmiedekraft bzw. für die einzustellenden Verformungsparameter, z.B. die Motorleistung, werden über eine von der Meßwertverarbeitungs- und- speichereinrichtung 7 abgehende Steuerleitung $10$ den einzelnen Einrichtungen bzw. deren Regelgliedern übermittelt.

Bei der Messung der einzelnen Verformungsparameter wird derart vorgegangen, daß, wie beispielsweise Fig. 2 zeigt, mit der Meßwerterfassung (Aufzeichnung, Auswertung) erst zu einem gewählten Zeitpunkt $t_1$ begonnen wird, zu dem ein Meßparameterwert, im vorliegenden Fall die Schmiedekraft K, einen gewissen Wert angenommen hat; zum Zeitpunkt $t_0$ besitzt die Schmiedekraft K den Wert Null. Im Moment des Auftreffens der Verformungswerkzeuge 17 auf das Werkstück 13 steigt die Kraft K an ( im dargestellten Fall zum Zeitpunkt $t_0$), bis sie im Moment des Eintretens der plastischen Verformung zur Zeit $t_1$ ihren maximalen Wert erreicht hat; zu diesem Zeitpunkt beginnt vorteilhafterweise die Erfassung der Meßwerte. Bis zum willkürlich wählbaren Meßende, z.B. dem Abfall der Schmiedekraft K ( im vorliegenden Fall auf den Wert $0$ zum Zeitpunkt $t_2$) kann eine Vielzahl von Messungen und Meßwerterfassungen eines oder mehrerer, vorzugsweise aller Parameter, um den Verformungsverlauf möglichst exakt aufzuzeichnen bzw. steuern zu können, erfolgen. Im Zeitraum zwischen $t_2$ und dem Beginn $t_3$ (= $t_0$) des nächsten Verformungstaktes erfolgen keine Messungen, um der Meßwertverarbeitungseinheit 7 ausreichende Verarbeitungszeit zu bieten bzw. weil die Aufzeichnung von Meßwerten in dieser Zeitspanne unnötig ist. Die im Zeitintervall $t_0$ bis $t_1$ gemessenen Werte werden unterdrückt.

Die Meßwerterfassung erfolgt ferner vorteilhafterweise nur dann, wenn die aufgenommene elektrische Wirkleistung des bzw. der Antriebsmotore M der Verformungseinrichtung 1 oberhalb der Maschinenleerlaufleistung liegen; damit ist sichergestellt, daß eine Meßwerterfassung nur dann erfolgt, wenn die Verformungswerkzeuge 17 auf ein Werkstück 13 treffen. Die Verschiebung des Beginns der Meßwerterfassung zu einem definierten Punkt des Kraftverlaufs stellt sicher, daß die Verformungswerkzeuge 17 zum Zeitpunkt des Beginns der Meßwerterfassung das Werkstück 13 mechanisch erfaßt haben und somit definierte Verhältnisse vorliegen.

Vorteilhafterweise kann auch zur Synchronisation der Meßwerterfassung bzw. Messung bei Langschmiedemaschinen der Einsatz der Schwingbremse herangezogen werden, welcher beispielsweise mindestens viermal je Sekunde ( Zeitpunkt $t_{00}$ ) erfolgt. Nach einer bestimmten Zeitspanne von z.B. 25 msec erfolgt sodann der Meßbeginn ( $0_3 = t_0$ ).

Die Messung kann wie in Fig. 2 angedeutet, auch zu einem willkürlich wählbaren Zeitpunkt t beginnen, zu dem vom Werkzeug auf das Werkstück bereits Kraft ausgeübt wird.

Es erfolgt somit zuerst eine Messung ohne Aufzeichnung der Parameter ( zwischen $t_0$ oder $t_0$ , und $t_1$ ); wenn im Zuge dieser Messungen ein bestimmter charakteristischer Verlauf eines bestimmten Parameters, z.B. der Verformungskraft, festgestellt wird, erfolgt der Beginn der Meßwerterfassung ( zur Zeit $t_1$ ) bis zu einem gewählten Endzeitpunkt ( zur Zeit $t_2$), dann erfolgt eine Pause in der Messung bis zum Zeitpunkt $t_3$ (=$t_0$).

Vorteilhafterweise wird die Messung während des Meßintervalls zumindest $10$ Mal, vorzugsweise etwa $500$ Mal, insbesondere bis zu $2000$ Mal, durchgefährt; eine oftmalige Messung, eine Mittelwertbildung, eine Anzeige der Maximal- und Minimalwerte und eine Aussonderung von als fehlerhaft bezeichneten Werten erhöhen die Prozeßhomogenität und ergeben eine getreue Kontrolle des Verformungsvorganges. Außerhalb vorgegebener Grenzen liegende erfaßte Meßwerte P′ werden ausgeschieden.

Wie in Fig. 2 strichliert eingezeichnet, kann der Beginn der Meßwerterfassung auch bei einem wesentlichen Knick oder einer vorgegebenen Anstiegsänderung in dem Verlauf der Verformungs-(Schmiede)kraft K eingeleitet werden, da der tatsächliche Verlauf der Kraft von der Zusammensetzung bzw. dem Aufbau und der Legierungszusammensetzung der verformten Werkstücke abhängt. Es wird jedoch vorausgesetzt, daß ein für ein -und dasselbe Werkstück innerhalb jedes Verformungstaktes ein vergleichbarer Parameterverlauf bzw. eine maximale Kraft oder ein entsprechender Knick im Anstieg der Kraft auftritt, der einem definierten Verformungszustand entspricht.

Anstelle der Schmiedekraft kann auch die Bewegung des Werkstückes 13, z.B. eine bestimmte Verlängerung des Werkstückes 13 während der Verformung zur Triggerung der Messungen herangezogen werden, welche Verlängerung von den Wegmeßeinrichtungen 3,3′, festgestellt wird.

In ähnlicher Weise könnte auch die sich beim Auftreffen der Verformungswerkzeuge 17 auf dem Werkstück 13 verändernde Motorleistung zur Auslösung des Beginns des Meßintervalls herangezogen werden.

**Patentansprüche**

1. Verfahren zur Messung und Aufzeichnung von Verfahrensparametern bei der Werkstückverformung und-/oder zur Steuerung der Verformung von Werkstücken in Abhängigkeit von zumindest einem gemessenen Verfahrensparameter, dadurch gekennzeichnet, daß bei schritt- bzw. taktweise erfolgender Verformung von Werkstücken, z.B. Hämmern, Langschmieden, Pilgerschrittrohrwalzen od. dgl., der Beginn der Meßwerterfassung der Verfahrensparameter in Abhängigkeit von einer für die jeweiligen Verformungstakte(-schritte) charakteristischen Veränderung zumindest eines Parameterwertes gewählt wird und daß dieser durch die gewählte Parameterveränderung gegebene Beginn der Meßwerterfassung auch in allen folgenden Verformungstakten (-schritten) zumindest desselben Verformungsstiches als Beginn der Erfassung der Parameter in diesen Verformungstakten herangezogen wird.

2. Verfahren nach Anspruch 1, dadurch gekennzeichnet, daß als Parameter die vom Verformungswerkzeug auf das Werkstück ausgeübte Kraft herangezogen wird und daß mit der Meßwerterfassung zum Zeitpunkt der maximalen Krafteinwirkung des Verformungswerkzeuges auf das zu verformende Werkstück bzw. bei Feststellung einer wesentlichen Änderung des Anstieges bzw. Verlaufes der vom Verformungswerkzeug auf das Werkstück ausgeübten Kraft begonnen wird.

3. Verfahren nach Anspruch 1 oder 2, dadurch gekennzeichnet, daß während eines Verformungstaktes vom Beginn der Meßwerterfassung zu dem gegebenenfalls vom Ende der Kraftaufbringung auf das Werkstück definierten Meßende eine Vielzahl von Messungen der einzelnen Parameter vorgenommen wird.

4. Verfahren nach einem der Ansprüche 1 bis 3, dadurch gekennzeichnet, daß die im Zuge der oftmaligen Messungen erfaßten Werte in einem Verformungstakt gemittelt werden und der gemittelte Wert bzw. die maximalen und minimalen Meßwerte aufgezeichnet und/ oder dargestellt und vorzugsweise zur Steuerung zumindest des folgenden Verformungstaktes und/oder Verformungsstiches herangezogen werden

5. Verfahren nach einem der Ansprüche 1 bis 4, dadurch gekennzeichnet, daß außerhalb vorgegebener Parameterwerte liegende Meßwerte (P′) nicht berücksichtigt bzw. vor der Auswertung bzw. Aufzeichnung oder Steuerung ausgeschieden werden.

6. Verfahren nach einem der Ansprüche 1 bis 5, dadurch gekennzeichnet, daß die erfaßten Meßwerte und-/oder die für die einzelnen Verformungstakte gemittelten Werte über einen Verformungsstich gemittelt und aufgezeichnet und/oder dargestellt und vorzugsweise zur Steuerung zumindest des folgenden Verformungstaktes und/oder Verformungsstiches herangezogen werden.

7. Verfahren nach einem der Ansprüche 1 bis 6, dadurch gekennzeichnet, daß als Parameter die Verformungskraft und/oder die Werkzeugzustellung und/oder die Eintritts- und/oder die Austrittstemperatur des Werkstückes in die bzw. aus der Verformungseinrichtung und/oder die Bewegung bzw. die Geschwindigkeit bzw. der zurückgelegte Weg des Werkstückes in die und/oder aus der Verformungseinrichtung und-/oder die Motorleistung für den Antrieb der Verformungseinrichtung gemessen werden und gegebenenfalls in Anhängigkeit von dem Ergebnis eines Vergleiches der Parameter-Istwerte mit vorgegebenen Sollwerten für zumindest einen folgenden Verformungstakt eingeregelt werden.

8. Verfahren nach einem der Ansprüche 1 bis 7, dadurch gekennzeichnet, daß zur Steuerung der Parameter die im Zuge vorangehender Verformungstakte und/oder Verformungsstiche von gleichartigen Werkstücken erfaßte Meßwerte gegebenenfalls gemeinsam mit empirisch ermittelten Werten herangezogen werden.

9. Verfahren nach einem der Ansprüche 1 bis 8, dadurch gekennzeichnet, daß die Zeitspanne zwischen dem Beginn der Meßwerterfassung und dem Meßende kleiner ist als die Zeitdauer zwischen dem Beginn aufeinanderfolgender Verformungstakte bzw. gegebenenfalls kleiner ist als die Zeitdauer zwischen dem jeweiligen Beginn des Anstieges der vom Verformungswerkzeug ausgeübten Kraft in zwei aufeinanderfolgenden Verformungstakten.

10. Verfahren nach einem der Ansprüche 1 bis 9, dadurch gekennzeichnet, daß alle gemessenen Parameter im wesentlichen zum gleichen Zeitpunkt gemessen werden.

11. Verformungseinrichtung mit Einrichtungen zur Messung und Aufzeichnung von Verfahrensparametern und/oder zur Steuerung der Verformung von Werkstücken in Abhängigkeit von zumindest einem gemessenen Verfahrensparameter, insbesondere zur Durchführung des Verfahrens nach einem der Ansprüche 1 bis 1Ø, dadurch gekennzeichnet, daß bei takt- bzw. schrittweise Verformungen eines Werkstückes (13) vornehmenden Verformungseinrichtungen (1), z.B. Schmiedeeinrichtungen, Hämmerwerken, Pilgerschrittrohrwalzwerken od. dgl., zumindest eine Meßeinrichtung ( 2,2', 3,3', 4,5) für die von den Verformungswerkzeugen (16) aufgebrachte Kraft und/oder für die Einlauf- und/oder Auslauftemperatur des Werkstückes (13) in die bzw. aus der Verformungseinrichtung (1) und/oder den von den Bewegungseinrichtungen (14, 15) bzw. den vom Werkstück (13) zurückgelegten Weg bzw. dessen Geschwindigkeit in die und/oder aus der Verformungseinrichtung (1) und/oder für die Leistung des Antriebs (M) der Verformungswerkzeuge (16) vorgesehen ist, welche Meßeinrichtung(en) (2,2',3,3',4,5) an eine Meßwertverarbeitungs(7) und/oder -aufzeichnungs- (8) und/oder- anzeigeeinheit (9) angeschlossen ist (sind).

12. Einrichtung nach Anspruch 11, dadurch gekennzeichnet, daß die Einrichtungen (14, 15) zur Bewegung des Werkstückes (13) in die und/oder aus der Verformungseinrichtung (1) und/oder der Antriebsmotor (M) im Hinblick auf seine Motorleistung und/oder die Schmiedekraft von der Meßwertverarbeitungseinrichtung (7) in Abhängigkeit von gemessenen und/oder eingegebenen Parameterwerten gesteuert sind.

13. Einrichtung nach Anspruch 11 oder 12, dadurch gekennzeichnet, daß die Meßeinrichtung(en) (2,2',3,3',4,5) und/oder die Meßwertverarbeitungs- oder speichereinrichtung (7) von der Meßeinrichtung (4) für die Verformungs-(Schmiede)kraft zur Festlegung des Zeitpunktes bzw. des Beginns und gegebenenfalls auch des Endes der allenfalls wiederholt erfolgenden Messungen und Meßwerterfassungen der Parameter getriggert ist.

14. Einrichtung nach einem der Ansprüche 11 bis 13, dadurch gekennzeichnet, daß die Bewegungseinrichtungen (14, 15) für die Zufuhr des Werkstückes zur Verformungseinrichtung (1) einen Endanschlag (15) oder eine Schwingbremse zur Definition der Ausgangslage des Werkstückes (13) vor jedem Verformungs-takt besitzen.

Fig. 1

Fig. 2

**Europäisches Patentamt**

# EUROPÄISCHER RECHERCHENBERICHT

Nummer der Anmeldung

EP 91 89 0143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 511 219 (BROWN, BOVERI & CIE AG)<br>* Spalte 2, Zeile 37 - Spalte 7, Zeile 44; Figur 1 *<br>--- | 1-4,6-8,10-12 | G 05 B 19/42<br>B 21 B 37/00 |
| A | DE-A-2 511 113 (AB CARBOX)<br>* Seite 4, Absatz 2 - Seite 7, Absatz 1; Seite 10, Absatz 2 - Seite 11, Absatz 1 *<br>----- | 1,3,6-8,10 | |

**RECHERCHIERTE SACHGEBIETE (Int. Cl.5)**

G 05 B
B 21 B
B 30 B

Der vorliegende Recherchenbericht wurde für alle Patentansprüche erstellt

| Recherchenort | Abschlußdatum der Recherche | Prüfer |
|---|---|---|
| DEN HAAG | 28-10-1991 | NETTESHEIM J.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

    ......................................................................
& : Mitglied der gleichen Patentfamilie, übereinstimmendes Dokument

EPO FORM 1503 03.82 (P0403)